# FASCICULE DE BREVET EUROPEEN

(11) **EP 1 921 273 B1**
(45) Date de publication et mention de la délivrance du brevet: **07.10.2009**
(21) Numéro de dépôt: 07119994.7
(22) Date de dépôt: 05.11.2007
(51) Int. Cl.: F01D 9/04

(54) **Dispositif d'accrochage d'un distributeur d'une turbine**
Aufhängevorrichtung eines Turbinenleitkranzes
Device for attaching a turbine nozzle

(30) Priorité: 07.11.2006 FR 0654747
(43) Date de publication de la demande: 14.05.2008
(73) Titulaire: SNECMA, 75015 Paris (FR)
(72) Inventeur: Bart Jacques, 91450 SOISY SUR SEINE (FR); Escure, Didier, 77176 Nandy (FR); Rousselin, Stéphane, 77850 Hericy (FR)
(74) Mandataire: David, Daniel

(56) Documents cités:
- EP-A- 1 369 552
- EP-A1- 0 513 956
- US-A- 6 095 750

## Description

La présente invention se rapporte aux turbines de turboréacteur. Plus précisément, elle s'intéresse à l'accrochage d'un distributeur d'une turbine de turboréacteur.

L'invention vise un dispositif d'accrochage d'un distributeur d'une turbine sur des structures fixes de cette même turbine. Elle vise également une turbine comportant un tel dispositif d'accrochage. Elle vise enfin un turboréacteur équipé d'au moins un tel dispositif d'accrochage et/ou d'une telle turbine.

La turbine peut être une turbine haute pression.

Une turbine de turboréacteur comporte des éléments fixes (stator) et des éléments mobiles (rotor). Les éléments mobiles sont des roues porteuses de pales, intercalées entre des grilles de pales fixes, également appelées distributeur. L'ensemble distributeur/roue constitue un étage de turbine. Pour faciliter le montage de la turbine, les distributeurs sont parfois obtenus par assemblage d'au moins deux secteurs de distributeur. Chaque secteur de distributeur comporte un certain nombre de pales fixes réparties entre un anneau extérieur appelé plate-forme extérieure et un anneau intérieur appelé plateforme intérieure. Généralement, La plateforme intérieure se prolonge radialement vers l'intérieur par une bride d'accrochage servant à fixer le distributeur ou le secteur de distributeur sur une pièce support. Pour simplifier la suite de l'exposé, le terme « distributeur » sera employé pour désigner un distributeur entier ou un secteur de distributeur.

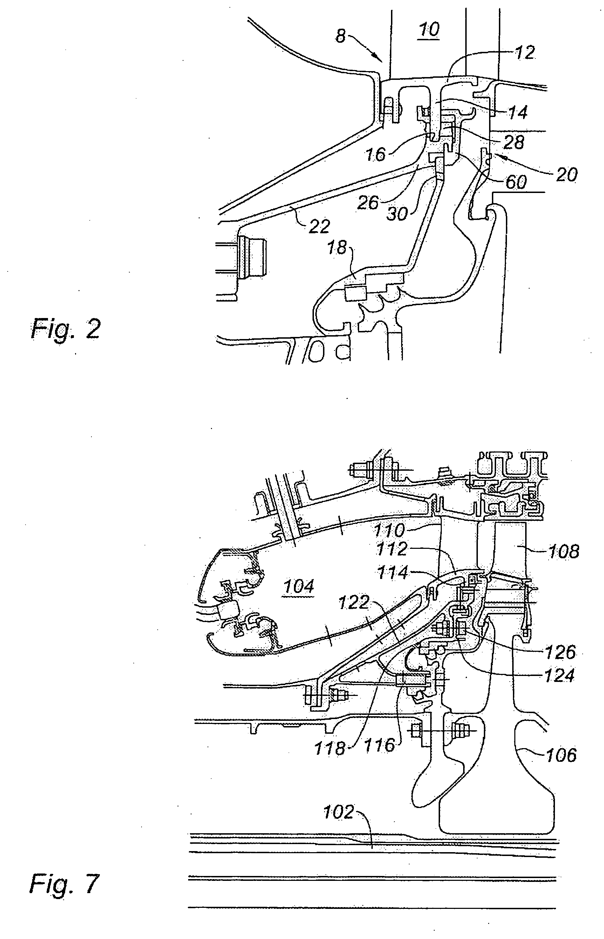

Une conception existante de dispositif d'accrochage est illustrée sur la figure 7, qui représente une portion de turboréacteur et montre un arbre 102, la chambre de combustion 104, et un étage de turbine haute pression dont la roue est constituée d'un disque 106 et de pales mobiles 108 et dont le distributeur comporte des pales fixes 110, une plateforme inférieure 112 et une bride d'accrochage 114.

Dans des conceptions existantes, comme celle illustrée sur la figure 7, l'accrochage du distributeur met en oeuvre en tant que pièce support un carter 122 des injecteurs 116. Cette pièce support est stabilisée par fixation sur une pièce fixe de structure, qui est une extension 124 d'un support de matière abradable 118. L'accrochage est réalisé par l'action combinée d'un blocage de la bride d'accrochage 114 par rapport audit carter et/ou par rapport à ladite extension, et d'une liaison boulonnée 126 entre ladite extension 124 et ledit carter 122. Le brevet EP 1369552 décrit une telle solution.

Selon une conception existante, le blocage de la bride d'accrochage 114 est réalisé par des moyens de blocage qui comportent un premier pion disposé suivant une direction radiale et s'appuyant sur un épaulement circonférentiel de ladite extension, ce premier pion étant destiné à bloquer la bride d'accrochage contre ledit carter suivant la direction axiale. Selon cette même conception, les moyens de blocage comportent également un deuxième pion traversant à la fois ledit carter et ladite bride d'accrochage, ce deuxième pion étant destiné à bloquer la bride d'accrochage suivant les directions radiale et circonférentielle.

Selon une autre conception existante telle que décrite dans EP 513956, chaque dispositif d'accrochage comporte une gorge de blocage dudit carter, ladite gorge s'ouvrant radialement vers l'extérieur et étant dimensionnée pour recevoir ladite bride d'accrochage et bloquer celle-ci radialement vers l'intérieur. Selon cette même autre conception existante, le dispositif d'accrochage comporte également un pion disposé suivant une direction axiale et destiné à bloquer la bride d'accrochage suivant les directions radiale et circonférentielle, ce pion traversant à la fois ladite bride d'accrochage et ledit carter, et venant en butée axialement contre ladite extension.

Suivant l'une et l'autre des deux conceptions existantes de dispositif d'accrochage, le carter des injecteurs et l'extension du support de matière abradable sont fixés entre eux par au moins une liaison boulonnée.

L'invention a pour but de proposer un accrochage simplifié, et notamment un accrochage qui ne mette pas en oeuvre de liaison boulonnée. L'objet de l'invention est un dispositif d'accrochage pour distributeur de turbine, ledit distributeur étant accroché sur une pièce support elle-même fixée sur une pièce stabilisatrice.

L'invention se rapporte à un dispositif d'accrochage qui comporte :
- des moyens d'emboîtement pour emboîter une extrémité support de la pièce support avec une extrémité stabilisatrice de la pièce stabilisatrice, et
- une pièce de maintien pour maintenir emboîtées ladite extrémité support et ladite extrémité stabilisatrice,

Le dispositif d'accrochage est caractérisé par le fait qu'il comprend des moyens de retenue pour empêcher une rotation relative de l'extrémité support et de l'extrémité stabilisatrice.

Ces derniers comportant au moins une rainure ayant une section semi-circulaire creusée dans une facette de l'extrémité support et au moins une rainure ayant une section semi-circulaire creusée dans une face de l'extrémité stabilisatrice, les deux rainures étant disposées, en service, l'une en regard de l'autre, de manière à définir ensemble un orifice lorsque les deux extrémités sont emboîtées.

Les moyens d'emboîtement comportant en outre un décrochement de l'extrémité support, ainsi qu'une forme et un dimensionnement complémentaires de l'extrémité stabilisatrice.

Lesdits moyens de retenue comportent, en outre, au moins un pion de retenue destiné à être introduit dans ledit orifice lorsque les deux extrémités sont emboîtées.

La pièce de maintien est une pièce annulaire qui présente une section sensiblement en forme de « J ». Elle comporte une ossature centrale qui se prolonge à une extrémité par une partie rayonnante se prolongeant elle-même par une partie terminale qui s'étend parallèlement à l'ossature centrale, lesdites ossature centrale, partie rayonnante et partie terminale définissant entre elles une gorge de maintien, et ladite ossature centrale se prolonge à une autre extrémité par une collerette qui lui est sensiblement perpendiculaire et qui surplombe la partie rayonnante et la partie terminale.

La pièce de maintien comporte, en outre, une bride de préhension qui s'étend suivant une direction sensiblement perpendiculaire à partir de l'ossature centrale, du côté opposé à la gorge de maintien par rapport à ladite ossature centrale.

Le dispositif d'accrochage comporte, en outre, des moyens d'encliquetage de l'extrémité support et de la pièce de maintien.

Lesdits moyens d'encliquetage comportent des dents de l'extrémité support et des dents complémentaires de la pièce de maintien. Les dents de l'extrémité support se trouvent sur un rebord de ladite extrémité support. Les dents complémentaires de la pièce de maintien se trouvent sur la partie terminale de ladite pièce de maintien.

Le dispositif d'accrochage comporte, en outre, des moyens d'immobilisation pour empêcher une rotation de la pièce de maintien par rapport à l'extrémité support. Les moyens d'immobilisation comportent un profil bombé de la pièce de maintien. Ils comportent, en outre, un trou d'immobilisation de l'extrémité support et un trou d'immobilisation de la pièce de maintien, les deux trous d'immobilisation ayant sensiblement le même diamètre, ainsi qu'un pion d'immobilisation destiné à traverser ces deux trous d'immobilisation. Le trou d'immobilisation de la pièce de maintien se trouve sur l'une des dents complémentaires de la pièce de maintien et ledit trou d'immobilisation de l'extrémité support se trouve sur l'une des dents de l'extrémité support.

Le dispositif d'accrochage comporte, en outre, des moyens de blocage du distributeur par rapport à l'extrémité support, ledit distributeur comportant des pales fixes angulairement réparties entre deux plateformes sensiblement annulaires et concentriques. Lesdits moyens de blocage comportent :
- une bride d'accrochage du distributeur, qui s'étend au-delà de la plateforme de plus petit rayon de courbure, par rapport aux pales,
- des trous traversant ladite bride d'accrochage, qui sont répartis suivant la direction circonférentielle de celle-ci,
- une gorge de blocage de l'extrémité support, ladite gorge de blocage s'ouvrant radialement vers l'extérieur,
- des trous traversant les murs de ladite gorge de blocage, et
- un pion de blocage destiné à traverser à la fois lesdits trous de la bride d'accrochage et lesdits trous des murs de la gorge de blocage.

De préférence, ledit pion de blocage est un pion épaulé. Ledit pion de blocage est retenu, en service, entre l'extrémité support et la pièce de maintien.

Selon une forme de réalisation de l'invention, la pièce support est constituée par un carter des injecteurs, et la pièce stabilisatrice est constituée par une extension d'un support de matière abradable.

Selon un deuxième aspect, l'invention se rapporte à une turbine comportant au moins un dispositif d'accrochage de distributeur selon le premier aspect.

Selon un troisième aspect, l'invention se rapporte à un moteur d'aéronef, comportant une turbine selon le deuxième aspect et/ou au moins un dispositif d'accrochage selon le premier aspect.

Un avantage de l'invention réside dans le fait que la masse globale du moteur d'aéronef est réduite, puisque l'accrochage du distributeur ne met plus en oeuvre de liaisons boulonnées. Il en découle une réduction des coûts d'exploitation du moteur d'aéronef, réalisée sur une économie de carburant pendant les phases de vol de l'aéronef.

Un autre avantage de l'invention réside dans le fait que les temps de montage sont réduits puisqu'il n'y a pas de liaison boulonnée. Il en découle une réduction des coûts de maintenance.

L'invention sera mieux comprise à la lecture de la description détaillée qui va suivre, d'un mode de réalisation particulier de l'invention, fourni à titre indicatif et nullement limitatif, et illustré au moyen des dessins annexés, dans lesquels :
- la figure 1 représente, en coupe axiale et de manière schématique un turboréacteur équipé d'une turbine dotée d'un dispositif d'accrochage selon l'invention ;
- la figure 2 représente, en coupe axiale, un dispositif d'accrochage selon l'invention ;
- la figure 3 représente, en vue en perspective, l'extrémité support ainsi que des moyens d'emboîtement et des moyens d'encliquetage ;
- la figure 4 illustre, en vue en perspective, l'emboîtement de l'extrémité support avec l'extrémité stabilisatrice, ainsi que les moyens de retenue ;
- la figure 5 représente, en vue en perspective, la pièce de maintien, ainsi que des moyens d'encliquetage et des moyens d'immobilisation ; et
- la figure 6 illustre, en coupe radiale, l'emboîtement de l'extrémité support avec l'extrémité stabilisatrice, ainsi que leur maintien au moyen de la pièce de maintien ; et
- la figure 7 déjà décrite, représente, en coupe axiale, une portion de turboréacteur illustrant un dispositif d'accrochage de l'art antérieur.

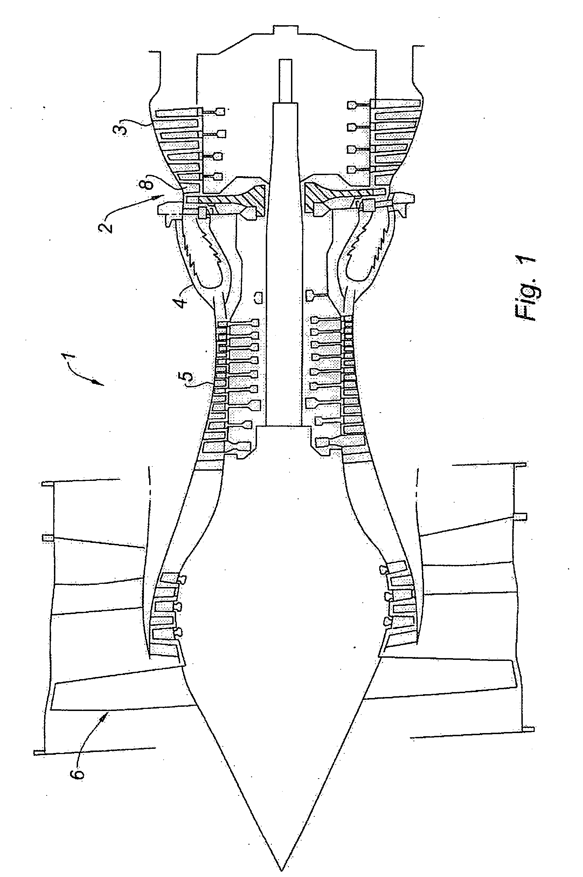

En se référant tout d'abord à la figure 1, il est représenté de manière schématique un turboréacteur 1, comportant une turbine haute pression 2, une turbine basse pression 3, une chambre de combustion 4, un compresseur haute pression 5, une soufflante 6. La turbine haute pression 2 est dotée de distributeurs 8.

En se référant maintenant à la figure 2, il est représenté un dispositif d'accrochage 20 d'un distributeur 8 de turbine, le distributeur 8 comportant des pales fixes 10 réparties entre une plateforme extérieure (non représentée) et une plateforme intérieure 12. Une bride d'accrochage 14 s'étend à partir de cette plateforme intérieure 12, en étant opposée aux pales fixes 10 par rapport à ladite plateforme intérieure 12.

De manière analogue aux conceptions existantes de dispositif d'accrochage décrites précédemment, le distributeur 8 est accroché sur une pièce support, et cette pièce support est elle-même fixée sur une pièce stabilisatrice. Sur l'exemple illustré aux figures, la pièce support est un carter 22 des injecteurs (non représentés), et la pièce stabilisatrice est une extension 30 d'un support de matière abradable 18.

Le dispositif d'accrochage 20 selon l'invention met en oeuvre une pièce de maintien 60 qui contribue à la fixation de la pièce stabilisatrice 30 et de la pièce support 22, et qui contribue à l'accrochage du distributeur 8 sur la pièce support 22.

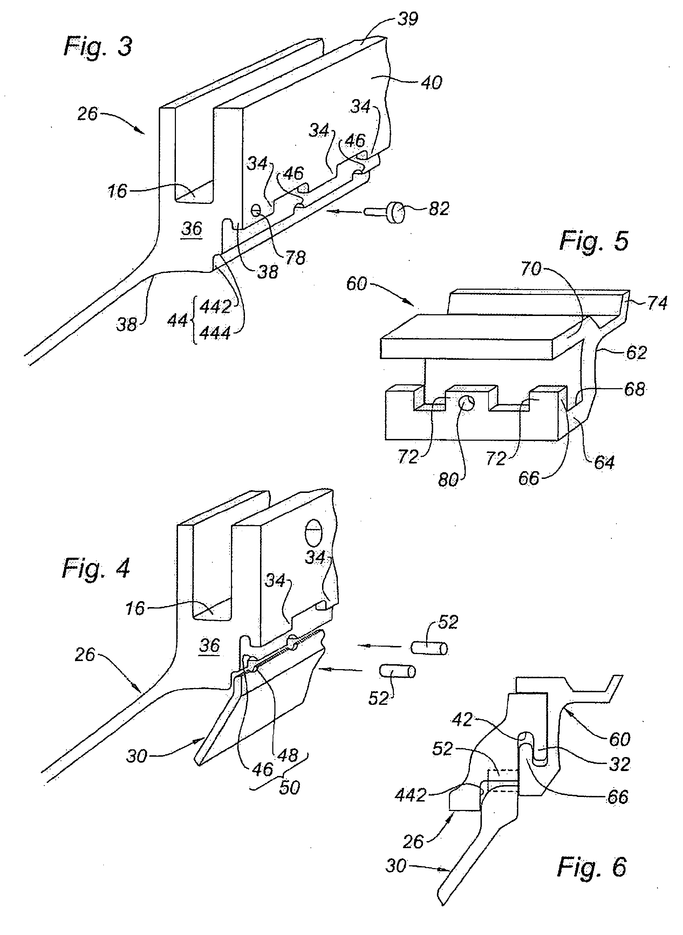

De manière analogue à l'une des conceptions existantes de dispositif d'accrochage décrites précédemment, le blocage du distributeur 8 par rapport à la pièce support 22 est réalisé au moyen de la bride d'accrochage 14, qui est bloquée dans une gorge de blocage 16 de l'extrémité 26 du carter 22 des injecteurs, au moyen d'un pion de blocage 28. A cet effet, les dimensions de la gorge de blocage 16 sont adaptées aux dimensions de la bride d'accrochage 14, la bride d'accrochage 14 est percée d'un trou de bride d'accrochage (non visible aux figures), et les murs de la gorge de blocage 16 sont respectivement percés de trous de murs (voir figure 4). Le pion de blocage 28 traverse ledit trou de bride d'accrochage et lesdits trous de murs. Le pion de blocage 28 est un pion épaulé, de telle sorte qu'il arrive en butée contre l'un des murs de la gorge de blocage 16, qui est le mur le plus en aval sur la figure 2.

La bride d'accrochage 14, la gorge de blocage 16, le pion de blocage 28 et les trous respectifs constituent des moyens de blocage du dispositif d'accrochage 20 selon l'invention.

Outre les moyens de blocage 14, 16, 28, le dispositif d'accrochage selon l'invention comporte des moyens d'emboîtement 44 d'une extrémité 26 du carter 22 des injecteurs avec une extrémité de l'extension 30 du support de matière abradable 18, des moyens de retenue 46, 48, 50, 52 pour empêcher une rotation relative du carter 22 par rapport à l'extension 24, une pièce de maintien 60 pour maintenir ensemble le carter 22 et l'extension 30, des moyens d'encliquetage 34, 72 de la pièce de maintien 60 sur le carter 22, et des moyens d'immobilisation 78, 80, 82 pour empêcher une rotation de la pièce de maintien 60 par rapport au carter 22. Tous ces moyens vont être décrits ci-après.

Pour clarifier la suite de l'exposé, l'extrémité 26 du carter 22 sera appelée « extrémité support 26 », et l'extrémité de l'extension 30 sera appelée « extrémité stabilisatrice 30 ».

Comme illustré sur la figure 3, l'extrémité support 26 est une pièce de révolution autour d'une direction axiale qui comporte un corps d'extrémité 36 à partir duquel s'étendent radialement vers l'extérieur les deux murs délimitant la gorge de blocage 16 décrite plus haut. Le corps d'extrémité 36 présente une section axiale sensiblement rectangulaire. Le corps d'extrémité 36 présente une face intérieure 38 située à l'opposé de la gorge de blocage 16, une face extérieure 39 et une face arrière 40 s'étendant radialement.

Le mur le plus en arrière de la gorge 16 comporte un rebord 32 qui le prolonge vers l'arrière par rapport à la face arrière 40 du corps 36. Ce rebord 32 s'étend radialement parallèlement à la direction opposée à la direction d'ouverture de la gorge 16. Entre le rebord 32 et la face arrière 40 est formée une gorge arrière 42. Sur l'extrémité libre de ce rebord 32 sont découpées des dents 34 qui se succèdent sur toute la périphérie du rebord 32. Ces dents 34 sont dirigées radialement vers l'intérieur.

A la jonction de la face intérieure 38 et de la face arrière 40, le corps d'extrémité 36 présente un décrochement 44 ayant une première facette 442 sensiblement parallèle à la face arrière 40 et une deuxième facette 444 sensiblement perpendiculaire à ladite première facette 442. Des rainures 46 sont ménagées dans ladite deuxième facette 444, lesdites rainures étant orientées suivant la direction axiale et ayant sensiblement un profil semi-circulaire.

La figure 4 illustre l'emboîtement entre l'extrémité support 26 et l'extrémité stabilisatrice 30. A cet effet, le bout de l'extrémité stabilisatrice 30 présente une forme et des dimensions qui sont complémentaires de celles du décrochement 44 de l'extrémité support 26. En particulier l'extrémité stabilisatrice 30 comporte une première face et une deuxième face destinées à venir en contact respectivement avec lesdites première facette 442 et deuxième facette 444 de l'extrémité support 26. Des rainures 48 sont ménagées dans ladite deuxième face, lesdites rainures 48 étant orientées suivant la direction axiale et ayant sensiblement un profil semi-circulaire.

En service, l'extrémité support 26 et l'extrémité stabilisatrice 30 sont emboîtées l'une avec l'autre par un emboîtement de type tenon et mortaise. Cet emboîtement est réalisé par une mise en butée des première facette 442 et deuxième facette 444 respectives de l'extrémité support 26 avec les première face et deuxième face respectives de l'extrémité stabilisatrice 30. L'emboîtement est réalisé de telle manière que les rainures 46 de la deuxième facette 444 de l'extrémité support 26 arrivent en regard des rainures 48 de la deuxième face de l'extrémité stabilisatrice 30, de manière à former, ensemble des orifices de retenue 50. Des pions de retenue 52 sont introduits dans lesdits orifices de retenue afin d'empêcher que ladite extrémité support 26 et ladite extrémité stabilisatrice 30 ne tournent axialement l'une par rapport à l'autre.

Les moyens d'emboîtement du dispositif d'accrochage 20 comportent ledit décrochement 44 de l'extrémité support 26, ainsi que les formes et dimensions complémentaires de l'extrémité stabilisatrice 30.

Les moyens de retenue du dispositif d'accrochage 20 comportent lesdites rainures 46 de l'extrémité support 26, lesdites rainures 48 de l'extrémité stabilisatrice 30 et lesdits orifices de retenue 50, ainsi que lesdits pions de retenue 52.

L'emboîtement entre l'extrémité support 26 et l'extrémité stabilisatrice 30 est maintenu au moyen d'une pièce de maintien 60, qui est illustrée à la figure 5.

La pièce de maintien 60 est une pièce annulaire de révolution autour d'une direction axiale. Elle comporte une ossature centrale rectiligne 62. Celle-ci se prolonge à une extrémité par une partie rayonnante 64 se prolongeant elle-même par une partie terminale 66 qui revient vers l'ossature centrale 62 et s'étend parallèlement à celle-ci. L'ossature centrale 62, la partie rayonnante 64 et la partie terminale 66 définissent entre elles une gorge de maintien 68, et ladite ossature centrale 62 se prolonge à une autre extrémité par une collerette rectiligne 70 qui lui est sensiblement perpendiculaire et qui surplombe ladite partie rayonnante 64 et la dite partie terminale 66. En coupe axiale, la pièce de maintien 60 présente une section ayant sensiblement une forme de « J » dont la barre verticale correspond à l'ossature centrale 62 et dont la barre horizontale correspond à la collerette 70.

L'ossature centrale 62 constitue une zone élastiquement déformable de la pièce de maintien 60, qui permet la mise en place de celle-ci par un opérateur, comme il sera décrit par la suite.

Sur l'extrémité libre de la partie terminale 66 sont découpées des dents 72 qui se succèdent sur toute la périphérie de cette partie terminale 66. La forme et les dimensions des dents 72 sont complémentaires de la forme et des dimensions des dents 34 du rebord 32 de l'extrémité support 26.

La pièce de maintien 60 comporte également une bride de préhension 74 qui s'étend à partir de l'ossature centrale 62, du côté opposé à la gorge de maintien 68 par rapport à ladite ossature centrale 62, et en étant légèrement décalée par rapport à la collerette 70. Cette bride de préhension 74 comporte deux zones successives qui sont angulairement décalées l'une par rapport à l'autre et qui facilitent la prise en main de cette bride de préhension 74 ainsi que la déformation de l'ossature centrale 62 par un opérateur.

La figure 6 illustre, en coupe radiale, le maintien de l'emboîtement des deux extrémités 26, 30 au moyen de la pièce de maintien 60. La pièce de maintien 60 a été encliquetée sur l'extrémité support 26, qui n'est représenté que partiellement.

L'opération d'encliquetage est réalisée de la manière suivante. L'opérateur saisit la pièce de maintien 60 par sa bride de préhension 74. Il introduit l'extrémité libre de la partie terminale 66 de la pièce de maintien 60 dans la gorge arrière 42 du corps 36 de l'extrémité 26, en faisant passer les dents complémentaires 72 de la pièce de maintien 60 entre les dents 34 du rebord 32. Simultanément, le rebord 32 de l'extrémité support 26 se trouve introduit dans la gorge de maintien 68 de la pièce de maintien 60. Cette introduction est facilitée par la présence de la zone élastique de la pièce de maintien 60. L'opérateur relâche ensuite la bride de préhension 74. L'ossature centrale 62 de la pièce de maintien 60 se trouve alors plaquée contre le rebord 32 de l'extrémité support 26, et la collerette 70 de la pièce de maintien 60 se trouve plaquée contre la face extérieure 39 de l'extrémité support 26. Puis l'opérateur fait tourner la pièce de maintien 60 par rapport à l'extrémité support 26 par une rotation axiale. Les dents 34 du rebord 32 et les dents complémentaires 72 de la pièce de maintien 60 se chevauchent et empêchent que l'extrémité support 26 et la pièce de maintien 60 ne s'écartent l'une de l'autre. L'encliquetage ainsi obtenu est de type verrouillage à baïonnette.

Il résulte de l'encliquetage qui vient d'être décrit que l'extrémité stabilisatrice 30 se trouve plaquée axialement contre la première facette 442 de l'extrémité support 26 par la partie terminale 66 de la pièce de maintien 60.

Les moyens d'encliquetage du dispositif d'accrochage 20 comportent les dents 34 du rebord 32 de l'extrémité support 26 ainsi que les dents complémentaires 72 de la pièce de maintien 60.

Le dispositif d'accrochage 20 comporte encore des moyens d'immobilisation destinés à empêcher une rotation inverse de la pièce de maintien 60 par rapport à l'extrémité support 26 qui conduirait à une mise hors de prise non souhaitée de celles-ci.

Ces moyens d'immobilisation comportent un profil légèrement bombé 76 de l'ossature centrale 62, la convexité de ce profil légèrement bombé 76 étant située du côté de la gorge de maintien 68 (voir figure 5). Ce profil légèrement bombé 76 provoque une tension axiale dans la pièce de maintien 60, qui crée une friction entre ladite pièce de maintien 60 et la face arrière 40 de l'extrémité support 26, et empêche une rotation relative de ces deux pièces (voir figure 6).

Des moyens d'immobilisation supplémentaires sont illustrés sur les figures 3 et 5. Ils comportent un trou d'immobilisation 78 de l'extrémité support 26, percé dans l'une des dents 34 du rebord 32. Ils comportent aussi un trou d'immobilisation 80 de la pièce de maintien 60, percé dans l'une des dents complémentaires 72. Ils comportent enfin un pion d'immobilisation 82 destiné à être introduit dans ces deux trous d'immobilisation 78, 80 qui présentent à cet effet sensiblement le même diamètre. De préférence, le pion d'immobilisation 82 est un pion épaulé (voir figure 3). Lors de l'opération d'encliquetage, l'opérateur veille à mettre en regard l'une de l'autre les deux dents percées de ces deux trous d'immobilisation 78, 80, et immobilise les deux pièces encliquetées en introduisant le pion d'immobilisation 82 dans les deux trous d'immobilisation 78, 80 ainsi mis en coïncidence.

L'invention n'est pas limitée au mode de réalisation particulier qui vient d'être décrit. Elle s'applique également à des formes de réalisation équivalentes à la portée de l'homme de métier.

## Revendications

1. Dispositif d'accrochage (20) pour distributeur (8) de turbine, comportant une pièce support (22) et une pièce stablisatrice, ledit distributeur (8) étant accroché sur une pièce support (22) elle-même fixée sur une pièce stabilisatrice
et comportant :
- des moyens d'emboîtement (44) pour emboîter une extrémité support (26) de la pièce support (22) avec une extrémité stabilisatrice (30) de la pièce stabilisatrice, et
- une pièce de maintien (60) pour maintenir emboîtées ladite extrémité support (26) et ladite extrémité stabilisatrice (30),
des moyens de retenue (46, 48, 50, 52) pour empêcher une rotation relative de l'extrémité support (26) et de l'extrémité stabilisatrice (30),
des moyens d'encliquetage (34, 72) de l'extrémité support (26) et de la pièce de maintien (60),
**caractérisé par le fait que** lesdits moyens de retenue (46, 48, 50, 52) comportent au moins une rainure (46) ayant une section semi-circulaire creusée dans une facette de l'extrémité support (26) et au moins une rainure (48) ayant une section semi-circulaire creusée dans une face de l'extrémité stabilisatrice (30), les deux rainures étant disposées, en service, l'une en regard de l'autre, de manière à définir ensemble un orifice de retenue (50) lorsque les deux extrémités (26, 30) sont emboîtées.

2. Dispositif d'accrochage (20) selon la revendication 1, dont lesdits moyens de retenue (46, 48, 50, 52) comportent, en outre, au moins un pion de retenue (52) destiné à être introduit dans ledit orifice de retenue (50) lorsque les deux extrémités (26, 30) sont emboîtées.

3. Dispositif d'accrochage (20) selon l'une quelconque des revendications 1 et 2, dont ladite pièce de maintien (60) est une pièce annulaire qui présente une section sensiblement en forme de « J ».

4. Dispositif d'accrochage (20) selon la revendication 3, dont ladite pièce de maintien (60) comporte une ossature centrale (62) qui se prolonge à une extrémité par une partie rayonnante (64) se prolongeant elle-même par une partie terminale (66) qui s'étend parallèlement à l'ossature centrale (62), lesdites ossature centrale (62), partie rayonnante (64) et partie terminale (66) définissant entre elles une gorge de maintien (68), et ladite ossature centrale (62) se prolonge à une autre extrémité par une collerette (70) qui lui est sensiblement perpendiculaire et qui surplombe la partie rayonnante (64) et la partie terminale (66).

5. Dispositif d'accrochage (20) selon la revendication 4, dont ladite pièce de maintien (60) comporte, en outre, une bride de préhension (74) qui s'étend suivant une direction sensiblement perpendiculaire à partir de l'ossature centrale (62), du côté opposé à la gorge de maintien (68) par rapport à ladite ossature centrale (62).

6. Dispositif d'accrochage (20) selon la revendication 1, dont lesdits moyens d'encliquetage comportent des dents (34) de l'extrémité support (26) et des dents complémentaires (72) de la pièce de maintien (60).

7. Dispositif d'accrochage (20) selon la revendication 6, dont lesdites dents (34) de l'extrémité support (26) se trouvent sur un rebord (32) de ladite extrémité support (26).

8. Dispositif d'accrochage (20) selon la revendication 6 et la revendication 5, dont lesdites dents complémentaires (72) de la pièce de maintien (60) se trouvent sur la partie terminale (66) de ladite pièce de maintien (60).

9. Dispositif d'accrochage (20) selon l'une quelconque des revendications 1 à 8, comportant, en outre, des moyens d'immobilisation (78, 80, 82) pour empêcher une rotation de la pièce de maintien (60) par rapport à l'extrémité support (26).

10. Dispositif d'accrochage (20) selon la revendication 9, dont lesdits moyens d'immobilisation (78, 80, 82) comportent un profil bombé (76) de la pièce de maintien (60).

11. Dispositif d'accrochage (20) selon la revendication 10, dont lesdits moyens d'immobilisation (78, 80, 82) comportent, en outre, un trou d'immobilisation (78) de l'extrémité support (26) et un trou d'immobilisation (80) de la pièce de maintien (60), les deux trous d'immobilisation (78, 80) ayant sensiblement le même diamètre, ainsi qu'un pion d'immobilisation (82) destiné à traverser ces deux trous d'immobilisation (78, 80).

12. Dispositif d'accrochage (20) selon la revendication 11, dont ledit trou d'immobilisation (80) de la pièce de maintien (60) se trouve sur l'une des dents complémentaires (72) de la pièce de maintien (60) et en ce que ledit trou d'immobilisation (78) de l'extrémité support (26) se trouve sur l'une des dents de l'extrémité support (26).

13. Dispositif d'accrochage (20) selon l'une quelconque des revendications 1 à 12, comportant, en outre, des moyens de blocage (14, 16, 28) du distributeur (8) par rapport à l'extrémité support (26), ledit distributeur (8) comportant des pales fixes (10) angulairement réparties entre deux plateformes sensiblement annulaires et concentriques.

14. Dispositif d'accrochage (20) selon la revendication 13, dont lesdits moyens de blocage (14, 16, 28) comportent:
- une bride d'accrochage (14) du distributeur (8), qui s'étend au-delà de la plateforme (12) de plus petit rayon de courbure, par rapport aux pales (10),
- des trous traversant ladite bride d'accrochage (14), qui sont répartis suivant la direction circonférentielle de celle-ci,
- une gorge de blocage (16) de l'extrémité support (26), ladite gorge de blocage (16) s'ouvrant radialement vers l'extérieur,
- des trous traversant les murs de ladite gorge de blocage (16), et
- un pion de blocage (28) destiné à traverser à la fois lesdits trous de la bride d'accrochage (14) et lesdits trous des murs de la gorge de blocage (16).

15. Dispositif d'accrochage (20) selon la revendication 14, dont ledit pion de blocage (28) est un pion épaulé.

16. Dispositif d'accrochage (20) selon la revendication 14 ou 15, dont ledit pion de blocage (28) est retenu, en service, entre l'extrémité support (26) et la pièce de maintien (60).

17. Dispositif d'accrochage (20) selon l'une quelconque des revendications 1 à 16, **caractérisé en ce que** ladite pièce support (22) est constituée par un carter des injecteurs.

18. Dispositif d'accrochage (20) selon l'une quelconque des revendications 1 à 17, **caractérisé en ce que** ladite pièce stabilisatrice (24) est constituée par une extension d'un support de matière abradable.

19. Turbine (4), **caractérisé en ce qu'**elle comporte au moins un dispositif d'accrochage (20) de distributeur (8) selon l'une quelconque des revendications 1 à 18.

20. Moteur d'aéronef (1), **caractérisé en ce qu'**il comporte une turbine selon la revendication 19 et/ou au moins un dispositif d'accrochage (20) selon l'une quelconque des revendications 1 à 18.

## Claims

1. An attaching device (20) for attaching a turbine nozzle guide vane (8), comprising a bearing part (22) and a stabilising part, said nozzle guide vane (8) being attached to the bearing part (22), in turn secured to the stabilising part,
and comprising:
- nesting means (44) for nesting a bearing end (26) of the bearing part (22) with a stabilising end (30) of the stabilising part, and
- a holding part (60) for holding said bearing end (26) and said stabilising end (30) nested together,
retaining means (46, 48, 50, 52) for preventing the bearing end (26) and the stabilising end (30) from being relatively rotated,
snapping means (34, 72) for snapping the bearing end (26) and the holding part (60),
**characterised in that** said retaining means (46, 48, 50, 52) comprise at least one groove (46) with a semi-circular cross section recessed in a face of the bearing end (26) and at least one groove (48) having a semi-circular cross section recessed in a face of the stabilising end (30), both grooves being disposed, in use, facing each other, so as to define together a retaining port (50) when both ends (26, 30) are nested.

2. The attaching device (20) according to claim 1, wherein said retaining means (46, 48, 50, 52) further comprise at least a retaining pin (52) intended to be inserted in said retaining port (50) when both ends (26, 30) are nested.

3. The attaching device (20) according to any of claims 1 and 2, wherein said holding part (60) is a ring part which has a substantially "J" shaped cross section.

4. The attaching device (20) according to claim 3, wherein said holding part (60) comprises a central backbone (62) which extends at an end thereof as a radiating portion (64) in turn extending as an end portion (66) which extends parallel to the central backbone (62), said central backbone (62), radiating portion (64) and end portion (66) defining therebetween a holding groove (68), and said central backbone (62) extends at another end thereof as a flange (70) which is substantially perpendicular thereto and which overhangs the radiating portion (64) and the end portion (66).

5. The attaching device (20) according to claim 4, wherein said holding part (60) further comprises a gripping clip (74) which extends in a substantially perpendicular direction from the central backbone (62), on the opposite side to the holding groove (68) with respect to said central backbone (62).

6. The attaching device (20) according to claim 1, wherein said snapping means comprise teeth (34) of the bearing end (26) and complementary teeth (72) of the holding part (60).

7. The attaching device (20) according to claim 6, wherein said teeth (34) of the bearing end (26) are located on a rim (32) of said bearing end (26).

8. The attaching device (20) according to claim 6 and claim 5, wherein said complementary teeth (72) of the holding part (60) are located on the end portion (66) of said holding part (60).

9. The attaching device (20) according to any of claims 1 to 8, further comprising immobilising means (78, 80, 82) for preventing the holding part (60) from being rotated relative to the bearing end (26).

10. The attaching device (20) according to claim 9, wherein said immobilising means (78, 80, 82) comprise a bulging profile (76) of the holding part (60).

11. The attaching device (20) according to claim 10, wherein said immobilising means (78, 80, 82) further comprise an immobilising hole (78) of the bearing end (26) and an immobilising hole (80) of the holding part (60), both immobilising holes (78, 80) having substantially the same diameter, as well as an immobilising pin (82) intended to go through both of these two immobilising holes (78, 80).

12. The attaching device (20) according to claim 11, wherein said immobilising hole (80) of the holding part (60) is located on one of the complementary teeth (72) of the holding part (60), and in that said immobilising hold (78) of the bearing end (26) is located on one of the teeth of the bearing end (26).

13. The attaching device (20) according to any of claims 1 to 12, further comprising locking means (14, 16, 28) for locking the nozzle guide vane (8) with respect to the bearing end (26), said nozzle guide vane (8) comprising fixed blades (10) angularly distributed between two substantially annular and concentric platforms.

14. The attaching device (20) according to claim 13, wherein said locking means (14, 16, 28) comprise:
- an attaching flange (14) for attaching the nozzle guide vane (8), which extends beyond the platform (12) of the smallest radius of curvature, with respect to the blades (10),
- holes going through said attaching flange (14), which are distributed along the circumferential direction thereof,
- a locking groove (16) for locking the bearing end (26), said locking groove (16) radially opening outwardly,
- holes going through the walls of said locking groove (16), and
- a locking pin (28) intended to go through both said holes of the locking flange (14) and said holes of the walls of the locking groove (16).

15. The attaching device (20) according to claim 14, wherein said locking pin (28) is a shoulder pin.

16. The attaching device (20) according to claim 14 or 15, wherein said locking pin (28) is retained, in use, between the bearing end (26) and the holding part (60).

17. The attaching device (20) according to any of claims 1 to 16, **characterised in that** said bearing part (22) is made up of a casing of the injectors.

18. The attaching device (20) according to any of claims 1 to 17, **characterised in that** said stabilising part (24) is made up of an extension of a support of an abradable material.

19. A turbine (4), **characterised in that** it comprises at least one nozzle guide vane (8) attaching device (20) according to any of claims 1 to 18.

20. An aircraft engine (1), **characterised in that** it comprises a turbine according to claim 19 and/or at least one attaching device (20) according to any of claims 1 to 18.

## Patentansprüche

1. Aufhängevorrichtung (20) für einen Turbinenleitkranz (8), die ein Tragteil (22) und ein Stabilisierungsteil umfasst, wobei der Leitkranz (8) an einem Tragteil (22) aufgehängt ist, das seinerseits an einem Stabilisierungsteil befestigt ist,
und umfassend:
- Einsteckmittel (44) zum Ineinanderstecken eines tragenden Endes (26) des Tragteils (22) mit einem stabilisierende Ende (30) des Stabilisierungsteils, und
- ein Halteteil (60), das tragende Ende (26) und das stabilisierende Ende (30) ineinandergesteckt zu halten,
Festhaltemittel (46, 48, 50, 52), um eine relative Drehung des tragenden Endes (26) und des stabilisierenden Endes (30) zu verhindern,
Mittel (34, 72) zum Einrasten des tragenden Endes (26) und des Halteteils (60),
**dadurch gekennzeichnet, dass** die Festhaltemittel (46, 48, 50, 52) mindestens eine Rille (46), die einen halbkreisförmigen Querschnitt aufweist und in einer Seite des tragenden Endes (26) vertieft ist, und mindestens eine Rille (48), die einen halbkreisförmigen Querschnitt aufweist, der in einer Seite des stabilisierenden Endes (30) vertieft ist, umfassen, wobei die beiden Rillen im Betrieb einander gegenüber angeordnet sind, um zusammen eine Festhalteöffnung (50) zu definieren, wenn die beiden Enden (26, 30) ineinander gesteckt sind.

2. Aufhängevorrichtung (20) nach Anspruch 1, wobei die Festhaltemittel (46, 48, 50, 52) ferner mindestens einen Festhaltestift (52) umfassen, der dazu gedacht ist, in das Festhalteloch (50) eingefügt zu werden, wenn die beiden Enden (26, 30) ineinander gesteckt sind.

3. Aufhängevorrichtung (20) nach einem der Ansprüche 1 und 2, wobei das Halteteil (60) ein ringförmiges Teil ist, das einen im Wesentlichen J-förmigen Querschnitt aufweist.

4. Aufhängevorrichtung (20) nach Anspruch 3, wobei das Halteteil (60) ein Mittelgerüst (62) umfasst, das sich an einem Ende in einem strahlenförmigen Abschnitt (64) verlängert, der sich wiederum in einem Endabschnitt (66) verlängert, der sich parallel zum Mittelgerüst (62) erstreckt, wobei das Mittelgerüst (62), der strahlenförmige Abschnitt (64) und der Endabschnitt (66) untereinander eine Haltekehle (68) definieren und das Mittelgerüst (62) sich an einem anderen Ende in einem Kragen (70) verlängert, der dazu im Wesentlichen senkrecht ist und der den strahlenförmigen Abschnitt (64) und den Endabschnitt (66) überragt.

5. Aufhängevorrichtung (20) nach Anspruch 4, wobei das Halteteil (60) ferner einen Griffrand (74) umfasst, der sich entlang einer Richtung erstreckt, die von dem Mittelgerüst (62) aus im Wesentlichen senkrecht ist, auf der Seite, die der Haltekehle (68) im Verhältnis zu dem Mittelgerüst (62) entgegengesetzt ist.

6. Aufhängevorrichtung (20) nach Anspruch 1, wobei die Einrastmittel Zähne (34) des tragenden Endes (26) und ergänzende Zähne (72) des Halteteils (60) umfassen.

7. Aufhängevorrichtung (20) nach Anspruch 6, wobei die Zähne (34) des tragenden Endes (26) sich auf einer Kante (32) des tragenden Endes (26) befinden.

8. Aufhängevorrichtung (20) nach Anspruch 6 und 5, wobei die ergänzenden Zähne (72) des Halteteils (60) sich auf dem Endabschnitt (66) des Halteteils (60) befinden.

9. Aufhängevorrichtung (20) nach einem der Ansprüche 1 bis 8, ferner umfassend Feststellmittel (78, 80, 82), um eine Drehung des Halteteils (60) im Verhältnis zum tragenden Ende (26) zu verhindern.

10. Aufhängevorrichtung (20) nach Anspruch 9, wobei die Feststellmittel (78, 80, 82) ein gewölbtes Profil (76) des Halteteils (60) umfassen.

11. Aufhängevorrichtung (20) nach Anspruch 10, wobei die Feststellmittel (78, 80, 82) ferner ein Feststellloch (78) des tragenden Endes (26) und ein Feststellloch (80) des Halteteils (60) umfassen, wobei die beiden Feststelllöcher (78, 80) im Wesentlichen den gleichen Durchmesser aufweisen, sowie einen Feststellstift (82), der dazu gedacht ist, durch diese beiden Feststelllöcher (78, 80) hindurch zu gehen.

12. Aufhängevorrichtung (20) nach Anspruch 11, wobei das Feststellloch (80) des Halteteils (60) sich auf einem der ergänzenden Zähne (72) des Halteteils (60) befindet, und dass das Feststellloch (78) des tragenden Endes (26) sich auf einem der Zähne des tragenden Endes (26) befindet.

13. Aufhängevorrichtung (20) nach einem der Ansprüche 1 bis 12, ferner umfassend Mittel (14, 16, 28) zum Blockieren des Leitkranzes (8) im Verhältnis zum tragenden Ende (26), wobei der Leitkranz (8) Leitschaufeln (10) umfasst, die winkelmäßig zwischen zwei im Wesentlichen ringförmigen und konzentrischen Plattformen verteilt sind.

14. Aufhängevorrichtung (20) nach Anspruch 13, wobei die Blockierungsmittel (14, 16, 28) folgendes umfassen:
- einen Flansch (14) zum Aufhängen des Leitkranzes (8), der sich über die Plattform (12) hinweg erstreckt, deren Krümmungsradius im Verhältnis zu den Schaufeln (10) kleiner ist,
- Löcher, die durch den Aufhängeflansch (14) gehen und an seiner Umfangsrichtung entlang verteilt sind,
- eine Kehle (16) zum Blockieren des tragenden Endes (26), wobei die Blockierungskehle (16) sich radial nach außen öffnet,
- Löcher, die durch die Wandungen der Blockierungskehle (16) gehen, und
- einen Blockierungsstift (28), der dazu gedacht ist, sowohl durch die Löcher des Aufhängeflansches (14) als auch durch die Löcher der Wandungen der Blockierungskehle (16) zu gehen.

15. Aufhängevorrichtung (20) nach Anspruch 14, wobei der Blockierungsstift (28) ein mit einem Absatz versehener Stift ist.

16. Aufhängevorrichtung (20) nach Anspruch 14 oder 15, wobei der Blockierungsstift (28) im Betrieb zwischen dem tragenden Ende (26) und dem Halteteil (60) festgehalten wird.

17. Aufhängevorrichtung (20) nach einem der Ansprüche 1 bis 16, **dadurch gekennzeichnet, dass** das Tragteil (22) aus einem Gehäuse der Einspritzdüsen besteht.

18. Aufhängevorrichtung (20) nach einem der Ansprüche 1 bis 17, **dadurch gekennzeichnet, dass** das Stabilisierungsteil (24) aus einer Verlängerung eines Trägers aus einlauffähigem Material besteht.

19. Turbine (4), **dadurch gekennzeichnet, dass** sie mindestens eine Aufhängevorrichtung (20) für einen Leitkranz (8) nach einem der Ansprüche 1 bis 18 umfasst.

20. Luftfahrzeugmotor (1), **dadurch gekennzeichnet, dass** er eine Turbine nach Anspruch 19 und/oder mindestens eine Aufhängevorrichtung (20) nach einem der Ansprüche 1 bis 18 umfasst.
